# EUROPEAN PATENT APPLICATION

(11) **EP 1 223 098 A2**
(43) Date of publication of application: **17.07.2002**
(21) Application number: 02000891.8
(22) Date of filing: 15.01.2002
(51) Int. Cl.: B62J 1/00

(54) **Saddle construction with an adjustable damping device for bicycles and motorcycles**

(30) Priority: 16.01.2001 IT MI010021 U
(71) Applicant: SELLE ITALIA S.R.L., 36028 Rossano Veneto (IT)
(72) Inventor: Bigolin, Guiseppe, 36028 Rossano Veneto (Vicenza) (IT)
(74) Representative: Cicogna, Franco

(57) **Abstract**

A saddle construction with an adjustable damping device for bicycles and motorcycles comprises a saddle framework, for supporting a saddle body (3), and being characterized in that between the saddle body (3) and framework (2) at least a damping device comprising a resilient element (5) and an adjusting device (7,10) for adjusting the compression of the resilient element (5) is arranged.

## Description

### BACKGROUND OF THE INVENTION

The present invention relates to a saddle including an adjustable damping device, specifically designed for bicycles and motorcycles.

Saddles including damping springs or other resilient elements for damping impacts and vibrations transmitted to said saddles by the bicycle or motorcycle thereon said saddle are mounted are already known.

For example, bicycle or motorcycle saddles conventionally comprise damping springs arranged between the saddle seat portion and support, for damping impacts and vibrations derived from the ground and transmitted to the saddle through the bicycle or motorcycle chassis.

The above mentioned devices are very simple from an operation and performance standpoint, but they do not allow to quickly and easily adjust the damping properties of the saddle.

### SUMMARY OF THE INVENTION

Accordingly, the aim of the present invention is to provide an improved saddle construction including an adjustable damping device, which is specifically designed for damping impacts and vibrations in bicycles and motorcycles.

Within the scope of the above mentioned aim, a main object of the present invention is to provide such a saddle which is very simple and reliable from a construction standpoint.

Yet another object of the present invention is to provide such a saddle construction the damping properties of which can be quickly and easily adjusted.

According to one aspect of the present invention, the above mentioned aim and objects, as well as yet other objects, which will become more apparent hereinafter, are achieved by a saddle construction, including an adjustable damping device, specifically designed for bicycles and motorcycles, said saddle construction comprising a saddle framework, for supporting a saddle body, and being characterized in that between said saddle body and framework at least a damping device including a resilient element and an adjusting device for adjusting a compression of said resilient element is arranged.

### BRIEF DESCRIPTION OF THE DRAWINGS

Further characteristics and advantages of the present invention will become more apparent hereinafter from the following disclosure of a preferred, though not exclusive, embodiment of the invention, which is illustrated, by way of . an indicative, but not limitative example, in the figures of the accompanying drawings, where:

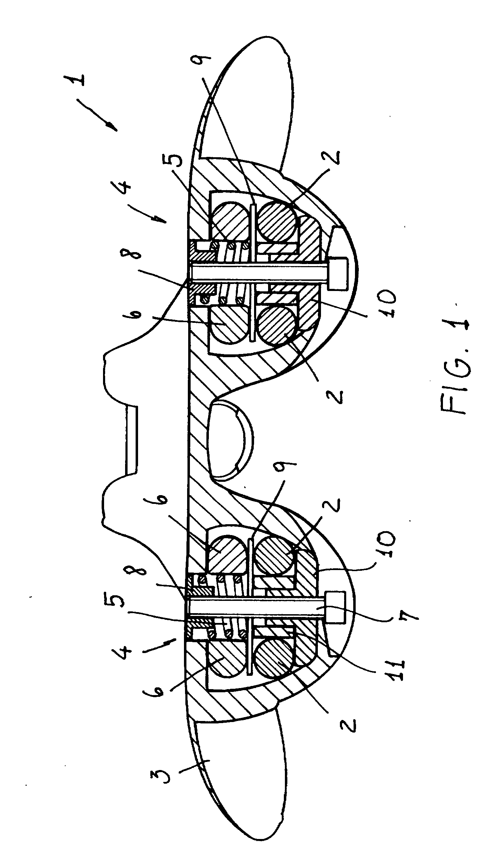

Figure 1 is a rear elevation view, as cross-sectioned, of a saddle construction according to the present invention;

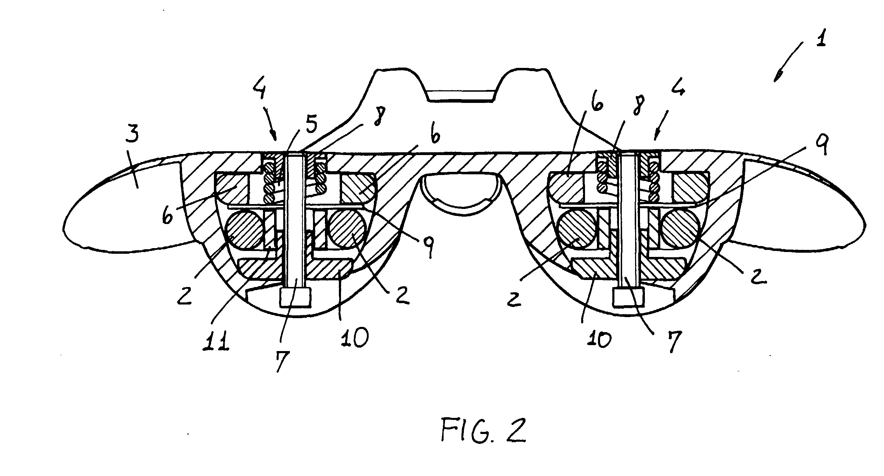

Figure 2 is a view similar to figure 1, but showing the saddle construction with the damping device in its maximum compression condition; and

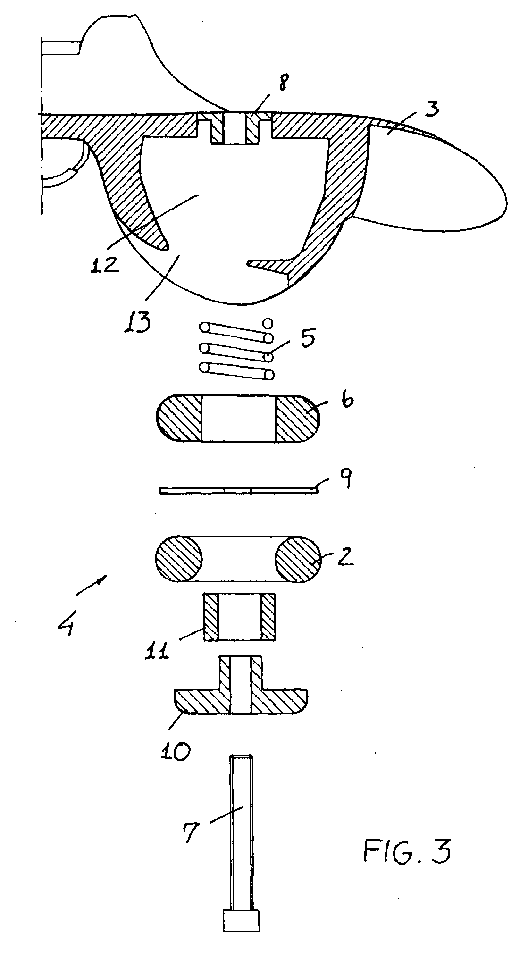

Figure 3 is an elevation exploded view of the damping device applied to the saddle construction according to the invention.

### DESCRIPTION OF THE PREFERRED EMBODIMENT

With reference to the number references of the above mentioned figures, the saddle construction, generally indicated by the reference number 1, comprises a saddle framework, including a plurality of framework tubes 2, shown in cross-section, and provided for supporting, in a per se known manner, a saddle body 3.

According to the invention, between the saddle body 3 and framework 2, is arranged a damping device including, in the shown embodiment, two damping assemblies 4, which are arranged at a rear position symmetrically of the longitudinal axis of the saddle construction 1.

Each damping assembly 4 comprises a resilient element, consisting of a coil spring 5, as in the shown embodiment, or of a rubber or other suitable resilient material element, arranged inside an elastomeric cushion element 6 having an annulus configuration and designed for absorbing the impacts and vibrations transmitted to the saddle through the saddle framework.

The spring 5 and toroidal cushion element 6 are coaxially arranged with respect to a threaded pin 7, and between the top surface of the saddle body 3 and the tubes or round rods 2 of the saddle framework, through the interposition of a washer 9, thereon the spring 5 bears.

The threaded pin 7 has an end portion thereof forcibly fitted in a bush 8 embedded in the saddle body 3.

An adjusting ring-nut 10 is threaded to the threaded pin 7, at a bottom position with respect to the saddle framework round rods 2 and through the interposition of an anti-friction washer 11, for adjusting the compression of the resilient element in order to change the damping properties of the saddle.

As shown, the damping assembly 4 is arranged in a chamber 12 provided in the saddle body 3 and including an opening 13 allowing the adjusting ring-nut 10 to be accessed.

More specifically, the damping assembly 4 allows, by properly operating the ring-nut 10, to press the resilient element 5, in particular the coils of the spring 5, thereby adjusting the operating stroke of the damping device.

An advantage of the invention is that the resilient element and elastomeric annulus cushion element can be interexchanged, in order to properly adjust the damping properties of the saddle.

It has been found that the invention fully achieves the intended aim and objects.

In fact, the saddle according to the present invention is very simple and reliable from the construction standpoint, while allowing an efficient adjustment of the damping properties thereof.

In practicing the invention, the used materials can be any, according to the requirements and the status of the art.

## Claims

1. A saddle construction, including an adjustable damping device, specifically designed for bicycles and motorcycles, said saddle construction comprising a saddle framework, for supporting a saddle body, and being **characterized in that** between said saddle body and framework at least a damping device including a resilient element and an adjusting device for adjusting a compression of said resilient element is arranged.

2. A saddle construction, according to Claim 1, **characterized in that** said adjusting device comprises a ring-nut adapted to change the compression of the resilient element in order to adjust the damping properties of said saddle construction.

3. A saddle construction, according to Claim 1, **characterized in that** said resilient element comprises a coil spring or a rubber or other resilient material element, and being arranged in an elastomeric toroidal cushion element operating to absorb impacts transmitted to said saddle construction through the saddle framework.

4. A saddle construction, according to Claim 3, **characterized in that** said resilient element and toroidal cushion element are coaxial with respect to a threaded pin and arranged between a top surface of the saddle body and the rods of the saddle framework, through an interposition of a washer bearing thereon said resilient element.

5. A saddle construction, according to Claim 4, **characterized in that** said adjusting ring nut is threaded to a threaded pin at the bottom of said saddle framework rods and through an interposition of an anti-friction washer.

6. A saddle construction, according to Claim 5, **characterized in that** said threaded pin has an end portion thereof forcibly fitted in a bush element embedded in said saddle body.

7. A saddle construction, according to Claim 5, **characterized in that** said adjusting rig-nut is threaded to said threaded pin at a bottom portion of said saddle framework through an interposition of an anti-friction washer.

8. A saddle construction, according to Claim 1, **characterized in that** said damping device is housed in a chamber formed in said saddle body and including an opening for allowing said adjusting ring nut to be accessed.

9. A saddle construction, according to Claim 3, **characterized in that** said resilient element and/or elastomeric toroidal cushion element are inter-exchangeable to adjust the damping properties of said saddle construction.
